# EUROPEAN PATENT APPLICATION

(11) **EP 4 275 785 A1**
(43) Date of publication of application: **15.11.2023**
(21) Application number: 23172742.1
(22) Date of filing: 11.05.2023
(51) Int. Cl.: B01D 53/94, B01J 23/63, B01J 35/00, B01J 35/04, B01J 37/02, F01N 3/10

(54) **ZONED TWC CATALYSTS FOR GASOLINE ENGINE EXHAUST GAS TREATMENTS**

(30) Priority: 13.05.2022 US 202263341786 P
(71) Applicant: Johnson Matthey Public Limited Company, London EC4A 4AB (GB)
(72) Inventor: LIU, Dongxia, Wayne, 19087 (US); STREHLAU, Wolfgang, 10500 Bangkok (TH)
(74) Representative: Wilson, Nicola Ann

(57) **Abstract**

A catalyst article for treating exhaust gas comprising: a substrate comprising an inlet end, an outlet end with an axial length L; a first catalytic region beginning at the inlet end and extending for less than the axial length L, wherein the first catalytic region comprises a first platinum group metal (PGM) component, a first inorganic oxide, and an optional first oxygen storage capacity (OSC) material; a second catalytic region beginning at the outlet end and extending for less than the axial length L, wherein the second catalytic region comprises a second PGM component, an optional second inorganic oxide, and a second OSC material; and a third catalytic region; wherein the weight ratio of the first inorganic oxide to the optional first OSC material is greater than 1:1.

## Description

### FIELD OF THE INVENTION

The present invention relates to a catalyzed article useful in treating exhaust gas emissions from gasoline engines.

### BACKGROUND OF THE INVENTION

Internal combustion engines produce exhaust gases containing a variety of pollutants, including hydrocarbons (HCs), carbon monoxide (CO), and nitrogen oxides ("NOₓ"). Emission control systems, including exhaust gas catalytic conversion catalysts, are widely utilized to reduce the amount of these pollutants emitted to atmosphere. A commonly used catalyst for gasoline engine exhaust treatments is the TWC (three-way catalyst). TWCs perform three main functions: (1) oxidation of CO; (2) oxidation of unburnt HCs; and (3) reduction of NOₓ.

Typically, a three-way catalyst contains precious metals (PGMs) such as palladium, rhodium, or platinum, or a combination, an oxygen storage material (OSC; Oxygen Storage Component) such as a cerium-zirconium mixed oxide, and an alumina. In some TWC catalysts, both the OSC and alumina are used as support materials for the precious metal(s) to improve the dispersion, prevent PGM sintering, and/or prevent alloying if more than one precious metal is used in the same washcoat. In other TWC catalysts, however, PGM is targeted on one of the support materials, either alumina or OSC, in order to have some unique catalytic action in a certain circumstance, such as a sudden change of the exhaust gas air to fuel ratio (lambda disturbance), light-off function in the cold start period, and so on... Therefore, there is a continuous demand for the development of a catalyst having different PGM partitioning on different support materials to meet the more stringent emission regulations including both normal engine operating conditions and special circumstances.

It is well known that the performance of the TWC catalyst is affected by the oxidation state of the PGMs. For example, metallic status Rh is much more active than rhodium oxides (Rh₂O₃). For the favorite Pd oxidation status, there are lots of debates in open literatures too. Arguably, depends on the reaction conditions, either metallic Pd or palladium oxides are favored.

A typical method of "fixing" a PGM on a target support material is incipient wetness impregnation. Namely, the diluted PGM aqueous salt is impregnated on the pores of the support material, followed by drying and calcination to prepare a PGM-containing powder. The powder is then slurried, and blended with another support slurry, wash-coated on a honeycomb substrate, and used as a catalyst through another calcination step. Two rounds of calcination or even more are executed if multiple layers of washcoats on the same substrates with calcination after each layer coating, resulting initial sintering of the PGM nanoparticles.

Alternatively, hydrolysis method is used to precipitate PGMs onto the target support material by changing the pH of the washcoat to turn the soluble PGM salts into insoluble species. For example, rhodium nitrate can be converted to rhodium hydroxide through ammonia addition and precipitated on either alumina or CeZr oxide support. However, this hydrolysis method is insufficient to control Pd affiliation, possible due to the high Pd loading in a typical TWC formulation.

This invention solves the problem of Pd affiliation in a TWC washcoat having both alumina and CeZr oxides without using the traditional incipient wetness impregnation method, which is not cost friendly.

### SUMMARY OF THE INVENTION

One aspect of the present disclosure is directed to a catalyst article for treating exhaust gas comprising: a substrate comprising an inlet end, an outlet end with an axial length L; a first catalytic region beginning at the inlet end and extending for less than the axial length L, wherein the first catalytic region comprises a first platinum group metal (PGM) component, a first inorganic oxide, and an optional first oxygen storage capacity (OSC) material; a second catalytic region beginning at the outlet end and extending for less than the axial length L, wherein the second catalytic region comprises a second PGM component, a second inorganic oxide, and an optional second OSC material; and a third catalytic region; wherein the weight ratio of the first inorganic oxide to the optional first OSC material is greater than 1:1.

The invention also encompasses an exhaust system for internal combustion engines that comprises the three-way catalyst component of the invention.

The invention also encompasses treating an exhaust gas from an internal combustion engine, in particular for treating exhaust gas from a gasoline engine. The method comprises contacting the exhaust gas with the three-way catalyst component of the invention.

### BRIEF DESCRIPTION OF THE DRAWINGS

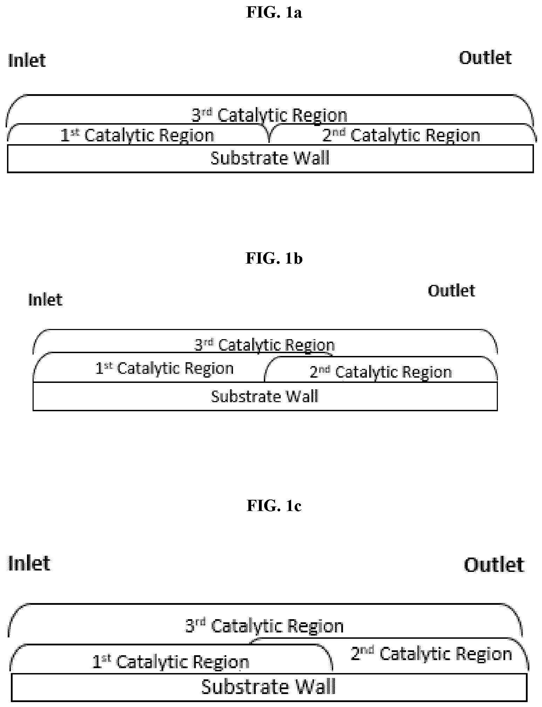

**FIG. 1a** shows one embodiment according to the present invention, the first catalytic region extends less than 100% of the axial length L, from the inlet end; the second catalytic region extends for less than 100% of the axial length L, form the outlet end. The total length of the second and the first catalytic region is equal to the axial length L. The 3^{rd} catalytic region extends 100% of the axial length L and overlies the first and second catalytic regions as top layer.
**FIG. 1b** shows one embodiment according to the present invention, the first catalytic region extends less than 100% of the axial length L, from the inlet end; the second catalytic region extends for less than 100% of the axial length L, form the outlet end. The total length of the second and the first catalytic region is greater than the axial length L. The 3^{rd} catalytic region extends 100% of the axial length L and overlies the first and second catalytic regions as top layer.
**FIG. 1c** depicts a variation of **FIG. 1b****.**

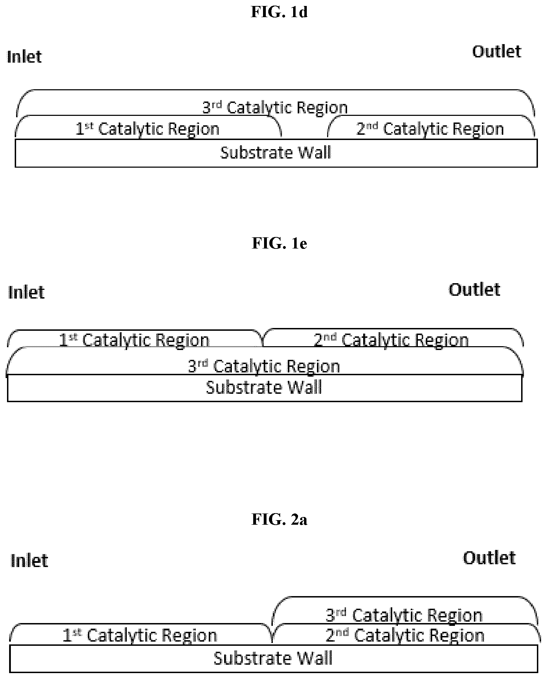

**FIG. 1d** shows one embodiment according to the present invention, the first catalytic region extends less than 100% of the axial length L, from the inlet end; the second catalytic region extends for less than 100% of the axial length L, form the outlet end. The total length of the second and the first catalytic region is less than the axial length L. The 3^{rd} catalytic region extends 100% of the axial length L and overlies the first and second catalytic regions as top layer.
**FIG. 1e** shows one embodiment according to the present invention, the 3^{rd} catalytic region extends 100% of the axial length L as the bottom layer, the first catalytic region extends less than 100% of the axial length L, from the inlet end; the second catalytic region extends for less than 100% of the axial length L, form the outlet end. The total length of the second and the first catalytic region is equal to (can also be greater than or less than) the axial length L.
**FIG. 2a** shows one embodiment according to the present invention, the first catalytic region extends less than 100% of the axial length L, from the inlet end; the second catalytic region extends for less than 100% of the axial length L, form the outlet end. The total length of the second and the first catalytic region is equal to (can also be greater than or less than) the axial length L. The 3^{rd} catalytic region extends less than 100% of the axial length L from the outlet end.

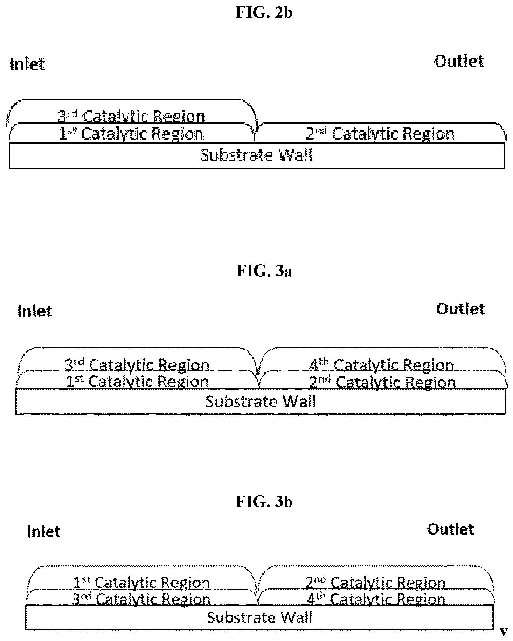

**FIG. 2b** shows one embodiment according to the present invention, the first catalytic region extends less than 100% of the axial length L, from the inlet end; the second catalytic region extends for less than 100% of the axial length L, form the outlet end. The total length of the second and the first catalytic region is equal to (can also be greater than or less than) the axial length L. The 3^{rd} catalytic region extends less than 100% of the axial length L from the inlet end.
**FIG. 3a** shows one embodiment according to the present invention, the first catalytic region extends less than 100% of the axial length L, from the inlet end; the second catalytic region extends for less than 100% of the axial length L, form the outlet end. The total length of the second and the first catalytic region is equal to (can also be greater than or less than) the axial length L and constitutes a bottom layer. The third catalytic region extends less than 100% of the axial length L from the inlet end the fourth catalytic region extends for less than 100% of the axial length L, form the outlet end. The total length of the third and the fourth catalytic region is equal to (can also be greater than or less than) the axial length L and constitutes a top layer.
**FIG. 3b** shows one embodiment according to the present invention, the third catalytic region extends less than 100% of the axial length L from the inlet end the fourth catalytic region extends for less than 100% of the axial length L, form the outlet end. The total length of the third and the fourth catalytic region is equal to (can also be greater than or less than) the axial length L and constitutes a bottom layer. The first catalytic region extends less than 100% of the axial length L, from the inlet end; the second catalytic region extends for less than 100% of the axial length L, form the outlet end. The total length of the second and the first catalytic region is equal to (can also be greater than or less than) the axial length L and constitutes a top layer.

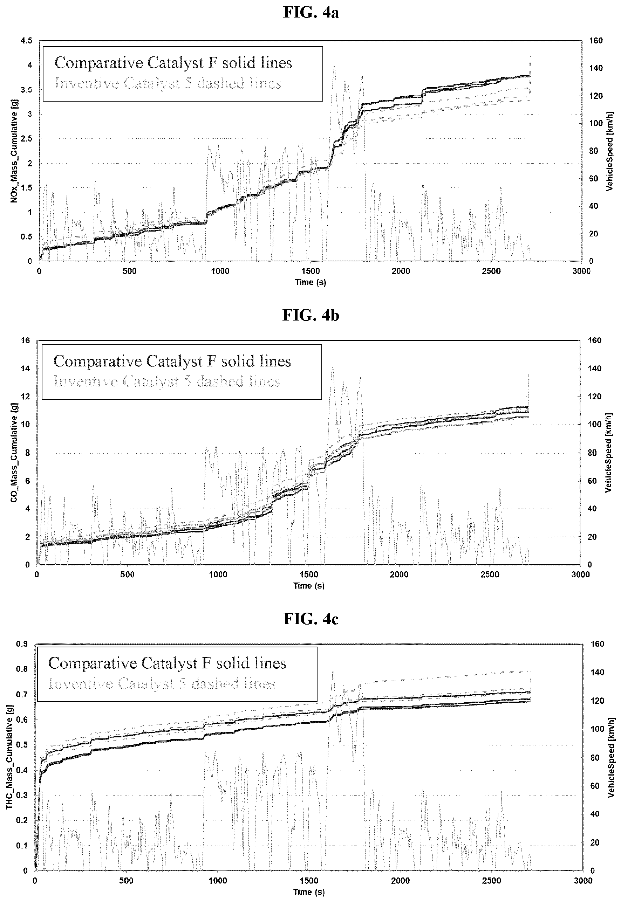

**FIG. 4a** shows NOₓ emission of Comparative Catalyst F and Inventive Catalyst 5 during the cold RDE cycle.
**FIG. 4b** shows CO emission of Comparative Catalyst F and Inventive Catalyst 5 during the cold RDE cycle.
**FIG. 4c** shows THC emission of Comparative Catalyst F and Inventive Catalyst 5 during the cold RDE cycle.

### DETAILED DESCRIPTION OF THE INVENTION

The present invention is directed to the catalytic treatment of combustion exhaust gas, such as that produced by gasoline and other engines, and to related catalysts and systems. More specifically, the invention relates the simultaneous treatment of NOₓ, CO, and HC in a vehicular exhaust system. The inventors have developed a TWC catalyst with a zoned Pd layer configuration, where majority of the Pd species are forced to land on either alumina or CeZr oxide by controlling the weight ratio of the two supports in inlet or outlet washcoats.

One aspect of the present disclosure is directed to a catalyst article for treating exhaust gas comprising: a substrate comprising an inlet end, an outlet end with an axial length L; a first catalytic region beginning at the inlet end and extending for less than the axial length L, wherein the first catalytic region comprises a first platinum group metal (PGM) component, a first inorganic oxide, and an optional first oxygen storage capacity (OSC) material; a second catalytic region beginning at the outlet end and extending for less than the axial length L, wherein the second catalytic region comprises a second PGM component, an optional second inorganic oxide, and a second OSC material; and a third catalytic region; wherein the weight ratio of the first inorganic oxide to the optional first OSC material is greater than 1:1.

The inventors have found that these catalysts in this way of coating show better catalytic performance that is not achieved in conventional uniform Pd layer configuration. Among the unexpected benefits of the present invention are improved TWC performance in transient driving cycles especially beyond cold start stage, significantly reduced emissions of exhaust pollutions, and thus more easily achieved emission targets, compared to conventional TWC catalysts of similar concentration (*e*.*g*., washcoat loadings).

### First Catalytic Region

The first catalytic region can extend for 20 to 90 percent of the axial length L. Preferably, the first catalytic region can extend for 25 to 80 percent, more preferably, 30 to 70 percent of the axial length L.

The first PGM component can be Pd, Pt, Rh, or a combination thereof. Preferably, the first PGM component, can be Pd, Pt or a combination thereof. More preferably, the first PGM component, can be Pd. Alternatively, the first PGM component can be Rh.

The first inorganic oxide is preferably an oxide of Groups 2, 3, 4, 5, 13 and 14 elements. The first inorganic oxide is preferably selected from the group consisting of alumina, magnesia, silica, ceria, barium oxides, and mixed oxides or composite oxides thereof. Particularly preferably, the first inorganic oxide is alumina, lanthanum-alumina, ceria, or a magnesia/alumina composite oxide. One especially preferred first inorganic oxide is alumina or lanthanum-alumina composite oxides.

The optional first OSC material, when present, is preferably selected from the group consisting of cerium oxide, a ceria-zirconia mixed oxide, and an alumina-ceria-zirconia mixed oxide. More preferably, the first OSC material comprises the ceria-zirconia mixed oxide. The ceria-zirconia mixed oxide can further comprise some dopants, such as lanthanum, neodymium, praseodymium, yttrium oxides, *etc.*

The first inorganic oxide and the optional first OSC material and can have a weight ratio of at least 3:2; preferably, at least 2:1 or at least 5:2.

Alternatively, the first inorganic oxide and the first OSC material can have a weight ratio of 10:1 to 3:2, preferably, 8:1 to 3:2 or 5:1 to 3:2; more preferably, 10:1 to 2:1 or 8:1 to 2:1; and most preferably, 5:1 to 2:1.

The ceria-zirconia mixed oxide can have a weight ratio of zirconia to ceria at least 50:50, preferably, higher than 55:45, more preferably, at least 60:40, 70:30, or 80:20.

The first PGM component can be supported on both the first inorganic oxide and the first OSC material.

The first catalytic region can comprise 0.1-300 g/ft³ of the first PGM component. Preferably, the first catalytic region can comprise 50-250 g/ft³ of the first PGM component, more preferably, 100-220 g/ft³ of the first PGM component. Alternatively, the first catalytic region can comprise 0.1-20 g/ft³ of the first PGM component. In some embodiments, the first catalytic region can comprise 1-20 g/ft³ or 2-15 g/ft³ of the first PGM component.

The optional first OSC material loading in the first catalytic region can be less than 2 g/in³. In some embodiments, the optional first OSC material loading in the first catalytic region is no greater than 1.5 g/in³, 1.2 g/in³, 1.0 g/in³, 0.9 g/in³, 0.8 g/in³, or 0.7 g/in³.

The total washcoat loading of the first catalyst region can be less than 4 g/in³, preferably, less than 3.5 g/in³, 3.0 g/in³, 2.5 g/in³, or 1.5 g/in³. Alternatively, the total washcoat loading of the first catalyst region can be 0.5-4 g/in³, 0.5-3.5 g/in³, preferably, 0.5-3.0 g/in³, 1.0-3.0 g/in³, 1.0-2.5 g/in³, or 1.5-2.5 g/in³.

The first catalytic region can further comprise a first alkali or alkaline earth metal component.

In some embodiments, the first alkali or alkaline earth metal may be deposited on the first OSC material. Alternatively, or in addition, the first alkali or alkaline earth metal may be deposited on the first inorganic oxide. That is, in some embodiments, the first alkali or alkaline earth metal may be deposited on, i.e. present on, both the first OSC material and the first inorganic oxide.

The first alkali or alkaline earth metal is generally in contact with the first inorganic oxide. Preferably the first alkali or alkaline earth metal is supported on the first inorganic oxide. Alternatively, the first alkali or alkaline earth metal may be in contact with the first OSC material.

The first alkali or alkaline earth metal is preferably barium, or strontium, and mixed oxides or composite oxides thereof. Preferably the barium or strontium, where present, is loaded in an amount of 0.1 to 15 wt%, and more preferably 3 to 10 wt% of barium or strontium, based on the total weight of the first catalytic region.

Preferably the barium is present as BaCO₃.

### Second Catalytic Region

The second catalytic region can extend for 20 to 90 percent of the axial length L. Preferably, the second catalytic region can extend for 25 to 80 percent, more preferably, 30 to 70 percent of the axial length L.

The second PGM component can be Pd, Pt, Rh, or a combination thereof. Preferably, the second PGM component, can be Pd, Pt or a combination thereof. More preferably, the second PGM component, can be Pd. Alternatively, the second PGM component, can be Rh.

The optional second inorganic oxide, when present, is preferably an oxide of Groups 2, 3, 4, 5, 13 and 14 elements. The optional second inorganic oxide is preferably selected from the group consisting of alumina, magnesia, silica, ceria, barium oxides, and mixed oxides or composite oxides thereof. Particularly preferably, the optional second inorganic oxide is alumina, lanthanum-alumina, ceria, or a magnesia/alumina composite oxide. One especially preferred second inorganic oxide is alumina or lanthanum-alumina composite oxides.

The second OSC material is preferably selected from the group consisting of cerium oxide, a ceria-zirconia mixed oxide, and an alumina-ceria-zirconia mixed oxide. More preferably, the second OSC material comprises the ceria-zirconia mixed oxide. The ceria-zirconia mixed oxide can further comprise some dopants, such as lanthanum, neodymium, praseodymium, yttrium oxides, *etc.*

The optional second inorganic oxide and the second OSC material and can have a weight ratio of less than 1:1; preferably, no more than 2:3; more preferably, no more than 1:2 or 2:5.

Alternatively, the second inorganic oxide and the second OSC material can have a weight ratio of 2:3 to 1:10, preferably, 2:3 to 1:8 or 2:3 to 1:5; more preferably, 1:2 to 1:10 or 1:2 to 1:8; and most preferably, 1:2 to 1:5.

The ceria-zirconia mixed oxide can have a weight ratio of zirconia to ceria at least 20: 80., preferably, higher than 50:50, more preferably, at least 55: 45, 60:40, 70:30, or 80:20.

The second PGM component can be supported on both the second inorganic oxide and the second OSC material.

The second catalytic region can comprise 0.1-300 g/ft³ of the second PGM component. Preferably, the second catalytic region can comprise 50-250 g/ft³ of the second PGM component, more preferably, 100-220 g/ft³ of the second PGM component. Alternatively, the second catalytic region can comprise 0.1-20 g/ft³ of the second PGM component. In some embodiments, the second catalytic region can comprise 1-20 g/ft³ or 2-15 g/ft³ of the second PGM component.

The second OSC material loading in the second catalytic region can be at least 0.5 g/in³. In some embodiments, the second OSC material loading in the second catalytic region can be at least 0.7 g/in³, 0.8 g/in³, 0.9 g/in³, 1.0 g/in³, 1.5 g/in³, 2.0 g/in³, or 2.5 g/in³.

The total washcoat loading of the second catalyst region can be less than 4 g/in³, preferably, less than 3.5 g/in³, 3.0 g/in³, 2.5 g/in³, or 1.5 g/in³. Alternatively, the total washcoat loading of the second catalyst region can be 0.5-4.0 g/in³, 0.5-3.5 g/in³, preferably, 0.5-3.0 g/in³, 1.0-3.0 g/in³, 1.0-2.5 g/in³, or 1.5-2.5 g/in³.

The second catalytic region can further comprise a second alkali or alkaline earth metal component.

In some embodiments, the second alkali or alkaline earth metal may be deposited on the second OSC material. Alternatively, or in addition, the second alkali or alkaline earth metal may be deposited on the second inorganic oxide. That is, in some embodiments, the second alkali or alkaline earth metal may be deposited on, i.e. present on, both the second OSC material and the second inorganic oxide.

The second alkali or alkaline earth metal is generally in contact with the second inorganic oxide. Preferably the second alkali or alkaline earth metal is supported on the second inorganic oxide. Alternatively, the second alkali or alkaline earth metal may be in contact with the second OSC material.

The second alkali or alkaline earth metal is preferably barium, or strontium, and mixed oxides or composite oxides thereof. Preferably the barium or strontium, where present, is loaded in an amount of 0.1 to 15 wt%, and more preferably 3 to 10 wt% of barium or strontium, based on the total weight of the second catalytic region.

Preferably the barium is present as BaCO₃.

### Third Catalytic Region

In some embodiments, the third catalytic region can extend for 100 percent of the axial length L. In other embodiments, the third catalytic region can extend for less than 100 percent of the axial length L, such as less than 95%, 90% or 85%. Alternatively, the third catalytic region can extend for 50 to 95 percent or 60 to 95 percent of the axial length L.

The third catalytic region can comprise a third PGM component, a third OSC material, a third alkali or alkaline earth metal component, and/or a third inorganic oxide.

The third PGM component can comprise Rh. In some embodiments, the third PGM component can further comprise Pd and/or Pt. In other embodiments, the third catalytic region can be essentially free of PGM metals other than the rhodium component. Alternatively, the third PGM component can comprise Pt and/or Pd.

The third catalytic region can comprise 0.1-20 g/ft³ of the third PGM component. In some embodiments, the third catalytic region can comprise 1-20 g/ft³ or 2-15 g/ft³ of the third PGM component. Alternatively, the third catalytic region can comprise 0.1-300 g/ft³ of the third PGM component. Preferably, the third catalytic region can comprise 50-250 g/ft³ of the third PGM component, more preferably, 100-220 g/ft³ of the third PGM component.

The total washcoat loading of the third catalyst region can be less than 4.0 g/in³; preferably, less than 3.5 g/in³, 3.0 g/in³ or 2 g/in³; more preferably, less than 1.5 g/in³ or 1.0 g/in³.

The third OSC material is preferably selected from the group consisting of cerium oxide, a ceria-zirconia mixed oxide, and an alumina-ceria-zirconia mixed oxide. Preferably the third OSC material comprises ceria-zirconium mixed oxide, with one or more of dopants of lanthanum, neodymium, yttrium, praseodymium, *etc.* In addition, the third OSC material may function as a support material for the third rhodium component.

The third catalytic region can further comprise a third alkali or alkaline earth metal component and/or a third inorganic oxide.

The ceria-zirconia mixed oxide can have a molar ratio of zirconia to ceria at least 50:50; preferably, higher than 60:40; and more preferably, higher than 80:20.

The third OSC material can be from 10 to 90 wt%; preferably, 25-75 wt%; more preferably, 35-65 wt %; based on the total washcoat loading of the third catalytic region.

The third OSC material loading in the third catalytic region can be less than 2 g/in³. In some embodiments, the third OSC material loading in the third catalytic region is no greater than 1.5 g/in³, 1.2 g/in³, 1.0 g/in³, or 0.5 g/in³.

The third catalytic region can be substantially free of the third alkali or alkaline earth metal. Reference to "substantially free" means that the recited material may be intentionally or unintentionally present in the recited layer in minor amounts. For example, the alkali or alkaline earth metal might be present in the first and/or the second catalytic regions and some of the alkali or alkaline earth metal might migrate/leach into the third catalytic region unintentionally during the coating processes.

The third inorganic oxide is preferably an oxide of Groups 2, 3, 4, 5, 13 and 14 elements. The third inorganic oxide is preferably selected from the group consisting of alumina, ceria, magnesia, silica, lanthanum, zirconium, neodymium, praseodymium oxides, and mixed oxides or composite oxides thereof. Particularly preferably, the third inorganic oxide is alumina, a lanthanum/alumina composite oxide, or a zirconium/alumina composite oxide. One especially preferred third inorganic oxide is a lanthanum/alumina composite oxide or a zirconium/alumina composite oxide. The third inorganic oxide may be a support material for the third rhodium component, and/or for the third OSC materials.

### Fourth Catalytic Region

In some embodiments, the catalyst article may further comprise a fourth catalytic region. In certain embodiments, the fourth catalytic region can extend for less than 100 percent of the axial length L, such as less than 95%, 90% or 85%. Alternatively, the fourth catalytic region can extend for 50 to 95 percent or 60 to 95 percent of the axial length L.

The fourth catalytic region can comprise a fourth PGM component, a fourth OSC material, a fourth alkali or alkaline earth metal component, and/or a fourth inorganic oxide.

The fourth PGM component can comprise Rh. In some embodiments, the fourth PGM component can further comprise Pd and/or Pt. In other embodiments, the fourth catalytic region can be essentially free of PGM metals other than the rhodium component. Alternatively, the fourth PGM component can comprise Pt and/or Pd.

The fourth catalytic region can comprise 0.1-20 g/ft³ of the fourth PGM component. In some embodiments, the fourth catalytic region can comprise 1-20 g/ft³ or 2-15 g/ft³ of the fourth PGM component. Alternatively, the fourth catalytic region can comprise 0.1-300 g/ft³ of the fourth PGM component. Preferably, the fourth catalytic region can comprise 50-250 g/ft³ of the fourth PGM component, more preferably, 100-220 g/ft³ of the fourth PGM component.

The total washcoat loading of the fourth catalyst region can be less than 4.0 g/in³; preferably, less than 3.5 g/in³, 3.0 g/in³ or 2 g/in³; more preferably, less than 1.5 g/in³ or 1.0 g/in³.

The fourth OSC material is preferably selected from the group consisting of cerium oxide, a ceria-zirconia mixed oxide, and an alumina-ceria-zirconia mixed oxide. Preferably the fourth OSC material comprises ceria-zirconium mixed oxide, with one or more of dopants of lanthanum, neodymium, yttrium, praseodymium, *etc.* In addition, the fourth OSC material may function as a support material for the fourth rhodium component.

The fourth catalytic region can further comprise a fourth alkali or alkaline earth metal component and/or a fourth inorganic oxide.

The ceria-zirconia mixed oxide can have a molar ratio of zirconia to ceria at least 50:50; preferably, higher than 60:40; and more preferably, higher than 80:20.

The fourth OSC material can be from 10 to 90 wt%; preferably, 25-75 wt%; more preferably, 35-65 wt %; based on the total washcoat loading of the fourth catalytic region.

The fourth OSC material loading in the fourth catalytic region can be less than 2 g/in³. In some embodiments, the fourth OSC material loading in the fourth catalytic region is no greater than 1.5 g/in³, 1.2 g/in³, 1.0 g/in³, or 0.5 g/in³.

The fourth catalytic region can be substantially free of the fourth alkali or alkaline earth metal. Reference to "substantially free" means that the recited material may be intentionally or unintentionally present in the recited layer in minor amounts. For example, the alkali or alkaline earth metal might be present in the first and/or the second catalytic regions and some of the alkali or alkaline earth metal might migrate/leach into the fourth catalytic region unintentionally during the coating processes.

The fourth inorganic oxide is preferably an oxide of Groups 2, 3, 4, 5, 13 and 14 elements. The fourth inorganic oxide is preferably selected from the group consisting of alumina, ceria, magnesia, silica, lanthanum, zirconium, neodymium, praseodymium oxides, and mixed oxides or composite oxides thereof. Particularly preferably, the fourth inorganic oxide is alumina, a lanthanum/alumina composite oxide, or a zirconium/alumina composite oxide. One especially preferred fourth inorganic oxide is a lanthanum/alumina composite oxide or a zirconium/alumina composite oxide. The fourth inorganic oxide may be a support material for the fourth rhodium component, and/or for the fourth OSC materials.

The catalyst article of the invention may comprise further components that are known to the skilled person. For example, the compositions of the invention may further comprise at least one binder and/or at least one surfactant. Where a binder is present, dispersible alumina binders are preferred.

### Configurations of First, Second, Third, and Fourth Catalytic Regions

The second catalytic region can overlap with the first catalytic region for 1 to 70 percent of the axial length L; preferably, the overlap is for 2 to 60 percent, 2 to 50 percent, 2 to 40 percent, 2 to 30 percent, 2 to 20 percent, 3 to 20 percent, or 3 to 10 percent of the axial length L (*e.g., see* **FIG. 1b, FIG. 1c****;** the first catalyst region can overlie the second catalytic region, or the second catalyst region can overlie the first catalytic region). Alternatively, the total length of the second catalytic region and the first catalytic region can equal to the axial length L. (*e.g., see* FIG. 1a, **FIG. 2a****,** **FIG. 2b, FIG. 3a, FIG. 3b**). In yet another alternative, the total length of the second catalytic region and the first catalytic region can be less than the axial length L, for example, no greater than 95%, 90%, 80%, or 70% of the axial length L (*e.g., see* **FIG. 2a****,** **FIG. 2b**).

In one aspect of the invention, various configurations of catalytic articles comprising the first, second, third, and fourth catalytic regions can be prepared as below.

**FIG. 1a** shows one embodiment according to the present invention, the first catalytic region extends less than 100% of the axial length L, from the inlet end; the second catalytic region extends for less than 100% of the axial length L, form the outlet end. The total length of the second and the first catalytic region is equal to the axial length L. The 3^{rd} catalytic region extends 100% of the axial length L and overlies the first and second catalytic regions as top layer.

**FIG. 1b** shows one embodiment according to the present invention, the first catalytic region extends less than 100% of the axial length L, from the inlet end; the second catalytic region extends for less than 100% of the axial length L, form the outlet end. The total length of the second and the first catalytic region is greater than the axial length L. The 3^{rd} catalytic region extends 100% of the axial length L and overlies the first and second catalytic regions as top layer.

**FIG. 1c** depicts a variation of **FIG. 1b****.**

**FIG. 1d** shows one embodiment according to the present invention, the first catalytic region extends less than 100% of the axial length L, from the inlet end; the second catalytic region extends for less than 100% of the axial length L, form the outlet end. The total length of the second and the first catalytic region is less than the axial length L. The 3^{rd} catalytic region extends 100% of the axial length L and overlies the first and second catalytic regions as top layer.

**FIG. 1e** shows one embodiment according to the present invention, the 3^{rd} catalytic region extends 100% of the axial length L as the bottom layer, the first catalytic region extends less than 100% of the axial length L, from the inlet end; the second catalytic region extends for less than 100% of the axial length L, form the outlet end. The total length of the second and the first catalytic region is equal to (can also be greater than or less than) the axial length L.

**FIG. 2a** shows one embodiment according to the present invention, the first catalytic region extends less than 100% of the axial length L, from the inlet end; the second catalytic region extends for less than 100% of the axial length L, form the outlet end. The total length of the second and the first catalytic region is equal to (can also be greater than or less than) the axial length L. The 3^{rd} catalytic region extends less than 100% of the axial length L from the outlet end.

**FIG. 2b** shows one embodiment according to the present invention, the first catalytic region extends less than 100% of the axial length L, from the inlet end; the second catalytic region extends for less than 100% of the axial length L, form the outlet end. The total length of the second and the first catalytic region is equal to (can also be greater than or less than) the axial length L. The 3^{rd} catalytic region extends less than 100% of the axial length L from the inlet end.

**FIG. 3a** shows one embodiment according to the present invention, the first catalytic region extends less than 100% of the axial length L, from the inlet end; the second catalytic region extends for less than 100% of the axial length L, form the outlet end. The total length of the second and the first catalytic region is equal to (can also be greater than or less than) the axial length L and constitutes a bottom layer. The third catalytic region extends less than 100% of the axial length L from the inlet end the fourth catalytic region extends for less than 100% of the axial length L, form the outlet end. The total length of the third and the fourth catalytic region is equal to (can also be greater than or less than) the axial length L and constitutes a top layer.

**FIG. 3b** shows one embodiment according to the present invention, the third catalytic region extends less than 100% of the axial length L from the inlet end the fourth catalytic region extends for less than 100% of the axial length L, form the outlet end. The total length of the third and the fourth catalytic region is equal to (can also be greater than or less than) the axial length L and constitutes a bottom layer. The first catalytic region extends less than 100% of the axial length L, from the inlet end; the second catalytic region extends for less than 100% of the axial length L, form the outlet end. The total length of the second and the first catalytic region is equal to (can also be greater than or less than) the axial length L and constitutes a top layer.

The flow-through monolith substrate has a first face and a second face defining a longitudinal direction there between. The flow-through monolith substrate has a plurality of channels extending between the first face and the second face. The plurality of channels extends in the longitudinal direction and provide a plurality of inner surfaces (e.g. the surfaces of the walls defining each channel). Each of the plurality of channels has an opening at the first face and an opening at the second face. For the avoidance of doubt, the flow-through monolith substrate is not a wall flow filter.

The first face is typically at an inlet end of the substrate and the second face is at an outlet end of the substrate.

The channels may be of a constant width and each plurality of channels may have a uniform channel width.

Preferably within a plane orthogonal to the longitudinal direction, the monolith substrate has from 300 to 900 channels per square inch, preferably from 400 to 800. For example, on the first face, the density of open first channels and closed second channels is from 600 to 700 channels per square inch. The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the flow-through monolith substrate described herein is a single component (i.e. a single brick). Nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

In some embodiments, the first catalytic region can be supported/deposited directly on the substrate (*e.g., see* **FIGs. 1a-1d**). In certain embodiments, the second catalytic region can be supported/deposited directly on the substrate (*e.g., see* **FIGs. 1a-1d**). In other embodiments, the third catalytic region is supported/deposited directly on the substrate (*e.g., see* **FIG. 1e****,** **FIG. 3b**).

In certain embodiments, at least 50% of the first catalytic region is not covered by the second catalytic region and/or the third catalytic region. In preferred embodiments, at least 60%, 70%, or 80% of the first catalytic region is not covered by the second catalytic region and/or the third catalytic region. In more preferred embodiments, at least 90% or 95% of the first catalytic region is not covered by the second catalytic region and/or the third catalytic region. In most preferred embodiments, 100% of the first catalytic region is not covered by the second catalytic region and/or the third catalytic region.

Another aspect of the present disclosure is directed to a method for treating a vehicular exhaust gas containing NOₓ, CO, and HC using the catalyst article described herein. Catalytic converters equipped with the TWC made according to this method show improved compared to conventional TWC (with the same PGM loading), also show especially improved performance in those transient conditions that beyond cold start/light-off stage.

Another aspect of the present disclosure is directed to a system for treating vehicular exhaust gas comprising the catalyst article described herein in conjunction with a conduit for transferring the exhaust gas through the system.

### DEFINITIONS

The term "region" as used herein refers to an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length. The reference to a "substantially uniform length" in this context refers to a length that does not deviate (e.g. the difference between the maximum and minimum length) by more than 10%, preferably does not deviate by more than 5 %, more preferably does not deviate by more than 1 %, from its mean value.

It is preferable that each "region" has a substantially uniform composition (i.e. there is no substantial difference in the composition of the washcoat when comparing one part of the region with another part of that region). Substantially uniform composition in this context refers to a material (e.g. region) where the difference in composition when comparing one part of the region with another part of the region is 5% or less, usually 2.5% or less, and most commonly 1% or less.

The term "zone" as used herein refers to a region having a length that is less than the total length of the substrate, such as ≤ 75 % of the total length of the substrate. A "zone" typically has a length (i.e. a substantially uniform length) of at least 5% (e.g. ≥ 5 %) of the total length of the substrate.

The total length of a substrate is the distance between its inlet end and its outlet end (e.g. the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:
(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.

Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:
(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.

Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The term "washcoat" is well known in the art and refers to an adherent coating that is applied to a substrate usually during production of a catalyst.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The expression "consist essentially" as used herein limits the scope of a feature to include the specified materials or steps, and any other materials or steps that do not materially affect the basic characteristics of that feature, such as for example minor impurities. The expression "consist essentially of" embraces the expression "consisting of".

The expression "substantially free of" as used herein with reference to a material, typically in the context of the content of a region, a layer or a zone, means that the material in a minor amount, such as ≤ 5 % by weight, preferably ≤ 2 % by weight, more preferably ≤ 1 % by weight. The expression "substantially free of" embraces the expression "does not comprise."

The expression "essentially free of" as used herein with reference to a material, typically in the context of the content of a region, a layer or a zone, means that the material in a trace amount, such as ≤ 1 % by weight, preferably ≤ 0.5 % by weight, more preferably ≤ 0.1 % by weight. The expression "essentially free of" embraces the expression "does not comprise."

Any reference to an amount of dopant, particularly a total amount, expressed as a % by weight as used herein refers to the weight of the support material or the refractory metal oxide thereof.

The term "loading" as used herein refers to a measurement in units of g/ft³ on a metal weight basis.

The following examples merely illustrate the invention. Those skilled in the art will recognize many variations that are within the spirit of the invention and scope of the claims.

### EXAMPLES

### Materials

All materials are commercially available and were obtained from known suppliers, unless noted otherwise.

### Comparative Catalyst A:

Comparative Catalyst A is a commercial three-way (Pd-Rh) catalyst with a double-layered structure. The bottom layer consists of Pd supported on a washcoat of a first CeZr mixed oxide, La-stabilized alumina, and Ba promotor. The washcoat loading of the bottom layer was about 2.4 g/in³ with a Pd loading of 131 g/ft³. Among them, either the La-stabilized alumina loading or the first CeZr mixed oxide loading is 1.0 g/in³, leading to the 1:1 weight ratio of the two Pd support materials. The first CeZr mixed oxide contains ~ 40% of ceria. This washcoat was coated from the inlet and outlet face of a ceramic substrate (750 cpsi, 3.0 mil wall thickness) using standard coating procedures with coating depth targeted of 50% of the substrate length, followed by drying and calcination.

The top layer consists of Rh supported on a washcoat of a second CeZr mixed oxide, La-stabilized alumina. The washcoat loading of the top layer was about 1.5 g/in³ with a Rh loading of 9 g/ft³. This washcoat was coated from the inlet and outlet face of a ceramic substrate (750 cpsi, 3.0 mil wall thickness) containing the bottom layer washcoat from above, using standard coating procedures with coating depth targeted of 50% of the substrate length, followed by drying and calcination.

### Inventive Catalyst 1:

### First Catalytic Region:

The first catalytic region consists of Pd supported on a washcoat of La-stabilized alumina and Ba promotor. The washcoat loading of the first catalytic region was about 2.8 g/in³ with a 131 g/ft³ of Pd. Among them, the La-stabilized alumina loading is 2.0 g/in³, and it is substantially free of the CeZr mixed oxide.

The first washcoat was coated from the inlet face of the ceramic substrate (750 cpsi, 3.0 mil wall thickness) containing the first catalytic region from above, using standard coating procedures with coating depth targeted of 50% of the substrate length, followed by drying.

### Second Catalytic Region:

The second catalytic region consists of Pd supported on a washcoat of a first CeZr mixed oxide and an alumina binder. The washcoat loading of the second catalytic region was about 2.3 g/in³ with a Pd loading of 131 g/ft³. Among them, the first CeZr mixed oxide loading is 2.0 g/in³, and it is substantially free of La-stabilized alumina. The first CeZr mixed oxide contains ~ 40% of ceria.

The second washcoat was coated from the outlet face of a ceramic substrate (750 cpsi, 3.0 mil wall thickness) using standard coating procedures with coating depth targeted of 50% of the substrate length, followed by drying and calcination.

### Third Catalytic Region:

The third catalytic region was prepared and coated the same way as the top layer of Comparative Catalyst A.

### Comparative Catalyst B:

Comparative Catalyst B was prepared and coated the same as Inventive Catalyst 1 with the exception that the second washcoat was coated from the inlet face of a ceramic substrate (750 cpsi, 3.0 mil wall thickness) and the first washcoat was coated from the outlet face of the ceramic substrate using standard coating procedures with coating depth targeted of 50% of the substrate length.

### Inventive Catalyst 2:

### First Catalytic Region:

The first catalytic region consists of Pd supported on a washcoat of the first CeZr mixed oxide, La-stabilized alumina, and Ba promotor. The washcoat loading of the first catalytic region was about 2.6 g/in³ with a 131 g/ft³ of Pd. Among them, the La-stabilized alumina loading is 1.5 g/in³, and the first CeZr mixed oxide loading is 0.5 g/in³, leading to a 3:1 weight ratio of La-Stabilized alumina to the first CeZr mixed oxide. The first CeZr mixed oxide contains ~ 40% of ceria.

The first washcoat was coated from the inlet face of the ceramic substrate (750 cpsi, 3.0 mil wall thickness) containing the first catalytic region from above, using standard coating procedures with coating depth targeted of 50% of the substrate length, followed by drying.

### Second Catalytic Region:

The second catalytic region consists of Pd supported on a washcoat of a first CeZr mixed oxide, La-stabilized alumina, and Ba promotor. The washcoat loading of the second catalytic region was about 2.3 g/in³ with a Pd loading of 131 g/ft³. Among them, the La-stabilized alumina loading is 0.5 g/in³, and the first CeZr mixed oxide loading is 1.5 g/in³, leading to a 1:3 weight ratio of La-Stabilized alumina to the first CeZr mixed oxide. The first CeZr mixed oxide contains ~ 40% of ceria.

The second washcoat was coated from the outlet face of a ceramic substrate (750 cpsi, 3.0 mil wall thickness) using standard coating procedures with coating depth targeted of 50% of the substrate length, followed by drying and calcination.

### Third Catalytic Region:

The third catalytic region was prepared and coated the same way as the top layer of Comparative Catalyst A.

### Comparative Catalyst C:

Comparative Catalyst C was prepared and coated the same as Inventive Catalyst 2 with the exception that the second washcoat was coated from the inlet face of a ceramic substrate (750 cpsi, 3.0 mil wall thickness) and the first washcoat was coated from the outlet face of the ceramic substrate using standard coating procedures with coating depth targeted of 50% of the substrate length.

### Inventive Catalyst 3:

Inventive Catalyst 3 was prepared according to the similar procedure as Inventive Catalyst 1 with the exception that the coating depth of the first and the second catalytic regions are at least 75% of the substrate length but less than 100%.

### Comparative Catalyst D:

Comparative Catalyst D was prepared according to the similar procedure as Comparative Catalyst B with the exception that the coating depth of the first and the second catalytic regions are at least 75% of the substrate length but less than 100%.

### Inventive Catalyst 4:

Inventive Catalyst 4 was prepared according to the similar procedure as Inventive Catalyst 2 with the exception that the coating depth of the first and the second catalytic regions are at least 75% of the substrate length but less than 100%.

### Comparative Catalyst E:

Comparative Catalyst E was prepared according to the similar procedure as Comparative Catalyst C with the exception that the coating depth of the first and the second catalytic regions are at least 75% of the substrate length but less than 100%.

### Comparative Catalyst F:

Comparative Catalyst F is a commercial three-way (Pd-Rh) catalyst with a double-layered structure. The bottom layer consists of Pd supported on a washcoat of a first CeZr mixed oxide, La-stabilized alumina, and Ba promotor. The washcoat loading of the bottom layer was about 2.4 g/in³ with a Pd loading of 112 g/ft³. Among them, either the La-stabilized alumina loading or the first CeZr mixed oxide loading is 1.0 g/in³, leading to the 1:1 weight ratio of the two Pd support materials. The first CeZr mixed oxide contains ~ 20% of ceria. This washcoat was coated from the inlet and outlet face of a ceramic substrate (750 cpsi, 3.0 mil wall thickness) using standard coating procedures with coating depth targeted of 50% of the substrate length, followed by drying and calcination.

The top layer consists of Rh supported on a washcoat of a second CeZr mixed oxide, La-stabilized alumina. The washcoat loading of the top layer was about 2.0 g/in³ with a Rh loading of 8 g/ft³. This washcoat was coated from the inlet and outlet face of a ceramic substrate (750 cpsi, 3.0 mil wall thickness) containing the bottom layer washcoat from above, using standard coating procedures with coating depth targeted of 50% of the substrate length, followed by drying and calcination.

### Inventive Catalyst 5:

### First Catalytic Region:

The first catalytic region consists of Pd supported on a washcoat of the first CeZr mixed oxide, La-stabilized alumina, and Ba promotor. The washcoat loading of the first catalytic region was about 2.4 g/in³ with a 112 g/ft³ of Pd. Among them, the La-stabilized alumina loading is 1.5 g/in³, and the first CeZr mixed oxide loading is 0.5 g/in³, leading to a 3:1 weight ratio of La-Stabilized alumina to the first CeZr mixed oxide. The first CeZr mixed oxide contains ~ 20% of ceria.

The first washcoat was coated from the inlet face of the ceramic substrate (750 cpsi, 3.0 mil wall thickness) containing the first catalytic region from above, using standard coating procedures with coating depth targeted of 50% of the substrate length, followed by drying.

### Second Catalytic Region:

The second catalytic region consists of Pd supported on a washcoat of a first CeZr mixed oxide, La-stabilized alumina, and Ba promotor. The washcoat loading of the second catalytic region was about 2.3 g/in³ with a Pd loading of 131 g/ft³. Among them, the La-stabilized alumina loading is 0.5 g/in³, and the first CeZr mixed oxide loading is 1.5 g/in³, leading to a 1:3 weight ratio of La-Stabilized alumina to the first CeZr mixed oxide. The first CeZr mixed oxide contains ~ 20% of ceria.

The second washcoat was coated from the outlet face of a ceramic substrate (750 cpsi, 3.0 mil wall thickness) using standard coating procedures with coating depth targeted of 50% of the substrate length, followed by drying and calcination.

### Third Catalytic Region:

The third catalytic region was prepared and coated the same way as the top layer of Comparative Catalyst F.

### Comparative Catalyst G:

Comparative Catalyst G is a commercial three-way (Pd-Rh) catalyst with a double-layered structure. The bottom layer consists of Pd supported on a washcoat of a second CeZr mixed oxide, La-stabilized alumina, and Ba promotor. The washcoat loading of the bottom layer was about 2.4 g/in³ with a Pd loading of 133 g/ft³. Among them, either the La-stabilized alumina loading or the second CeZr mixed oxide loading is 1.0 g/in³, leading to the 1:1 weight ratio of the two Pd support materials. The second CeZr mixed oxide contains ~ 20% of ceria. This washcoat was coated from the inlet and outlet face of a ceramic substrate (750 cpsi, 3.0 mil wall thickness) using standard coating procedures with coating depth targeted of 50% of the substrate length, followed by drying and calcination.

The top layer consists of Rh supported on a washcoat of a first CeZr mixed oxide, La-stabilized alumina. The washcoat loading of the top layer was about 2.0 g/in³ with a Rh loading of 7 g/ft³. This washcoat was coated from the inlet and outlet face of a ceramic substrate (750 cpsi, 3.0 mil wall thickness) containing the bottom layer washcoat from above, using standard coating procedures with coating depth targeted of 50% of the substrate length, followed by drying and calcination.

### Inventive Catalyst 6:

### First Catalytic Region:

The first catalytic region consists of Rh supported on a washcoat of La-stabilized alumina. The washcoat loading of the first catalytic region was about 2.0 g/in³ with a 7 g/ft³ of Rh. Among them, the La-stabilized alumina loading is 2.0 g/in³, and it is substantially free of the CeZr mixed oxide.

The first washcoat was coated from the inlet face of the ceramic substrate (750 cpsi, 3.0 mil wall thickness) containing the first catalytic region from above, using standard coating procedures with coating depth targeted of 50% of the substrate length, followed by drying.

### Second Catalytic Region:

The second catalytic region consists of Rh supported on a washcoat of a first CeZr mixed oxide and an alumina binder. The washcoat loading of the second catalytic region was about 2.2 g/in³ with a Rh loading of 7 g/ft³. Among them, the first CeZr mixed oxide loading is 2.0 g/in³, and it is substantially free of La-stabilized alumina. The first CeZr mixed oxide contains ~ 20% of ceria.

The second washcoat was coated from the outlet face of a ceramic substrate (750 cpsi, 3.0 mil wall thickness) using standard coating procedures with coating depth targeted of 50% of the substrate length, followed by drying and calcination.

### Third Catalytic Region:

The third catalytic region was prepared and coated the same way as the Pd bottom layer of Comparative Catalyst G.

Design of Inventive Catalyst 6 is illustrated in **Fig 1e**). Third Catalytic region was coated on the ceramic substrate at first, followed by drying and calcination. Then 1^{st} and 2^{nd} catalytic regions were coated from inlet and outlet with a drying step in between. Finally, the finished catalyst was calcined for a second time.

### Inventive Catalyst 7:

### First Catalytic Region:

The first catalytic region consists of Rh supported on a washcoat of the first CeZr mixed oxide and La-stabilized alumina. The washcoat loading of the first catalytic region was about 2.0 g/in³ with a 7 g/ft³ of Rh. Among them, the La-stabilized alumina loading is 1.5 g/in³, and the first CeZr mixed oxide loading is 0.5 g/in³, leading to a 3:1 weight ratio of La-Stabilized alumina to the first CeZr mixed oxide. The first CeZr mixed oxide contains ~ 20% of ceria.

The first washcoat was coated from the inlet face of the ceramic substrate (750 cpsi, 3.0 mil wall thickness) containing the first catalytic region from above, using standard coating procedures with coating depth targeted of 50% of the substrate length, followed by drying.

### Second Catalytic Region:

The second catalytic region consists of Rh supported on a washcoat of a first CeZr mixed oxide and La-stabilized alumina. The washcoat loading of the second catalytic region was about 2.0 g/in³ with a Rh loading of 7 g/ft³. Among them, the La-stabilized alumina loading is 0.5 g/in³, and the first CeZr mixed oxide loading is 1.5 g/in³, leading to a 1:3 weight ratio of La-Stabilized alumina to the first CeZr mixed oxide. The first CeZr mixed oxide contains ~ 20% of ceria.

The second washcoat was coated from the outlet face of a ceramic substrate (750 cpsi, 3.0 mil wall thickness) using standard coating procedures with coating depth targeted of 50% of the substrate length, followed by drying and calcination.

### Third Catalytic Region:

The third catalytic region was prepared and coated the same way as the Pd bottom layer of Comparative Catalyst G.

Design of Inventive Catalyst 7 is illustrated in **Fig 1e**). Third Catalytic region was coated on the ceramic substrate at first, followed by drying and calcination. Then 1^{st} and 2^{nd} catalytic regions were coated from inlet and outlet with a drying step in between. Finally, the finished catalyst was calcined for a second time.

**Table 1 Summary of All Catalysts**

| | Pd containing First Catalytic region | | | | Pd containing Second catalytic region | | | |
|---|---|---|---|---|---|---|---|---|
| | La-stabilized alumina loading (g/in³) | First CeZr mixed oxide loading (g/in³) | Weight ratio of Al₂O₃ to OSC | Target Dose Length | La-stabilized alumina loading (g/in³) | First CeZr mixed oxide loading (g/in³) | Weight ratio of Al₂O₃ to OSC | Target Dose Length |
| Comparative Catalyst A | 1.0 | 1.0 | 1:1 | 50% | 1.0 | 1.0 | 1:1 | 50% |
| Inventive Catalyst 1 | 2.0 | 0 | ∞ | 50% | 0 | 2.0 | 0 | 50% |
| Comparative Catalyst B | 0 | 2.0 | 0 | 50% | 2.0 | 0 | ∞ | 50% |
| Inventive Catalyst 2 | 1.5 | 0.5 | 3:1 | 50% | 0.5 | 1.5 | 1:3 | 50% |
| Comparative Catalyst C | 0.5 | 1.5 | 1:3 | 50% | 1.5 | 0.5 | 3:1 | 50% |
| Inventive Catalyst 3 | 2.0 | 0 | ∞ | >75% | 0 | 2.0 | 0 | >75% |
| | | | | < 100% | | | | < 100% |
| Comparative Catalyst D | 0 | 2.0 | 0 | >75% | 2.0 | 0 | ∞ | >75% |
| | | | | < 100% | | | | < 100% |
| Inventive Catalyst 4 | 1.5 | 0.5 | 3:1 | >75% | 0.5 | 1.5 | 1:3 | >75% |
| | | | | < 100% | | | | < 100% |
| Comparative Catalyst E | 0.5 | 1.5 | 1:3 | >75% | 1.5 | 0.5 | 3:1 | >75% |
| | | | | < 100% | | | | < 100% |
| Comparative Catalyst F | 1.0 | 1.0 | 1:1 | 50% | 1.0 | 1.0 | 1:1 | 50% |
| Inventive Catalyst 5 | 1.5 | 0.5 | 3:1 | 50% | 0.5 | 1.5 | 1:3 | 50% |

| | Rh containing First Catalytic region | | | | Rh containing Second catalytic region | | | |
|---|---|---|---|---|---|---|---|---|
| Comparative Catalyst G | 1.0 | 1.0 | 1:1 | 50% | 1.0 | 1.0 | 1:1 | 50% |
| Inventive Catalyst 6 | 2.0 | 0 | ∞ | 50% | 0 | 2.0 | 0 | 50% |
| Inventive Catalyst 7 | 1.5 | 0.5 | 3:1 | 50% | 0.5 | 1.5 | 1:3 | 50% |

### EXAMPLE 1: ENGINE BENCH TESTING PROCEDURES AND RESULTS

Comparative Catalysts A-E and Inventive Catalysts 1-4 were engine bench aged for 100 hours with a stoic/fuel cut aging cycle, targeting a peak catalyst bed temperature of 1000 °C. The catalysts were tested using a 2.0 L engine bench dynamometer performing a bespoke OEM designed real-world driving (RDE) cycle comprising acceleration and fuel shut-off conditions representing a cold urban, rural, motorway and hot urban speed phases. The cycle length was 2700 seconds from ambient-soaked conditions, reaching an approximate peak catalyst bed temperature of 700 °C and 250 kg/h mass air flow rate. A cold RDE test was used as the pre-condition cycle. After that, three hot RDE cycles were repeated with a 5-minute soak time in between. While the engine is at operating temperature, but the catalyst bed temperature is still hot. The advantage of running hot RDE with a cold RDE as pre-con is the very good reproducibility of Engine out emissions due to the inconsistent temperature at cold start period. To further improve the data accuracy, accumulative NOₓ, CO, and THC conversions were used to compare different catalysts, as shown in **Table 2.** NOₓ, CO and THC emissions at engine out position and post catalyst position were measured, and accumulated mass of each species was calculated across the cycle. Accumulative conversion was calculated based on the accumulative post catalyst emission and accumulative engine out emission. The results were averaged of three hot RDE runs and shown in **Table 2.**

The data in **Table 2** show clearly that all Inventive Catalysts of the present invention provides some NOₓ and CO performance benefits compared with Comparative Catalyst A, while the THC conversions are still equivalent to that of the reference. There are obvious NOₓ benefits in those configurations when the alumina rich catalytic regions are in the inlet side, compared to their counterparts with the CeZr oxides rich region in the inlet side. For example, Inventive Catalyst 1 has higher NOx conversion than Comparative Catalyst B, Inventive Catalyst 2 has higher NOₓ conversion than Comparative Catalyst C, and the same trend for Inventive Catalyst 3 and Comparative Catalyst D. Inventive Catalyst 4 and Comparative Catalyst E showed comparable NOₓ conversions. This could be because of the long dose length and having both alumina and CeZr oxides in the first and second catalytic regions, making it mostly like the Comparative Catalyst A. The best catalyst out of the total 4 inventive formulations is Inventive Catalyst 2, having alumina rich dose in the inlet side and the La-Stabilized alumina to CeZr oxide weight ratio of 3:1.

Averaged accumulative CO conversion of all the catalysts are compared in **Table 2.** CO conversion is more sensitive to the dose length. Regular dose length (50%) with alumina rich dose in the inlet is more beneficial for CO conversion, compared to their counterparts having CeZr oxides in the inlet side. For example, Inventive Catalyst 1 has higher CO conversion that Comparative Catalyst B, and Inventive Catalyst 2 has higher CO conversion than Comparative Catalyst C.

The Catalyst bed temperature is above 450 °C during the entire Hot RDE cycle, therefore the THC conversions of all the catalysts are equally great due to the hot bed temperature.

**Table 2 Results of Averaged Accumulative Conversion by Engine bench hot RDE cycle**

| | Averaged Accumulative Conversion (%) | | |
|---|---|---|---|
| | NOₓ | CO | THC |
| Comparative Catalyst A | 94 | 93 | 98 |
| Inventive Catalyst 1 | 95 | 94 | 99 |
| Comparative Catalyst B | 93 | 93 | 99 |
| Inventive Catalyst 2 | 98 | 96 | 99 |
| Comparative Catalyst C | 97 | 95 | 99 |
| Inventive Catalyst 3 | 97 | 95 | 99 |
| Comparative Catalyst D | 95 | 96 | 99 |
| Inventive Catalyst 4 | 95 | 94 | 99 |
| Comparative Catalyst E | 96 | 95 | 99 |

### EXAMPLE 2: COLD RDE TEST IN ENGINE TESTING

Both Comparative Catalyst F and Inventive Catalyst 5 were engine bench aged for 150 hours with a stoic/fuel cut aging cycle, targeting a peak catalyst bed temperature of 1000 °C. The catalysts were tested using a 2.0 L bi-turbo, 4-cylinder, Eu(VI)b-calibrated engine bench dynamometer performing a bespoke OEM designed real-world driving (RDE) cycle comprising acceleration and fuel shut-off conditions representing a cold-start urban, motorway and hot urban speed phases. The cycle length was 2700 seconds from ambient-soaked conditions, reaching an approximate peak catalyst temperature of 700 °C, at ~140 km/hr vehicle speed and ~400 kg/hr mass air flow rate. NOₓ, CO and THC emissions at post catalyst position were measured and accumulated mass of each species was calculated across the cycle. Three runs were conducted on each catalyst formulation, and the accumulative emissions of three runs against time are plotted and shown in the figures below.

**FIG. 4a** is the NOₓ emission of Comparative Catalyst F and Inventive Catalyst 5 during the cold RDE cycle. It is very clear that Inventive Catalyst 5 with zoned configuration having alumina rich dose in the inlet side and CeZr mixed oxide rich dose in the outlet side gave lower NOₓ emissions across the entire cold RDE driving cycle. CO and THC emission are shown in **FIG. 4b** and **FIG. 4c****,** respectively. The two catalysts show comparable CO emissions and THC emissions.

### EXAMPLE 3: ENGINE BENCH TESTING PROCEDURES AND RESULTS

Comparative Catalyst G and Inventive Catalysts 6 and 7 were engine bench aged for 50 hours with a stoic/fuel cut aging cycle, targeting a peak catalyst bed temperature of 1000 °C. The catalysts were tested using a 2.0 L engine bench dynamometer performing a bespoke OEM designed real-world driving (RDE) cycle comprising acceleration and fuel shut-off conditions representing a cold urban, rural, motorway and hot urban speed phases. The cycle length was 2700 seconds from ambient-soaked conditions, reaching an approximate peak catalyst bed temperature of 700 °C and 250 kg/h mass air flow rate. A cold RDE test was used as the pre-condition cycle. After that, three hot RDE cycles were repeated with a 5-minute soak time in between. While the engine is at operating temperature, but the catalyst bed temperature is still hot. The advantage of running hot RDE with a cold RDE as pre-con is the very good reproducibility of Engine out emissions due to the inconsistent temperature at cold start period. To further improve the data accuracy, accumulative NOₓ, CO, and THC conversions were used to compare different catalysts, as shown in **Table 3.** NOₓ, CO and THC emissions at engine out position and post catalyst position were measured, and accumulated mass of each species was calculated across the cycle. Accumulative conversion was calculated based on the accumulative post catalyst emission and accumulative engine out emission. The results were averaged of three hot RDE runs and shown in **Table 3.** In addition, cumulative mass of ammonia generation throughout the three hot RDE cycles was averaged for each sample and listed in **Table 3.**

While Inventive Catalyst 6 showed comparative performance than Comparative Catalyst G, Inventive Catalyst 7 of the present invention show slight benefits compared with Comparative Catalyst G and Inventive Catalyst 7 also generated less NH₃.

**Table 3 Results of Averaged Accumulative Conversion by Engine bench hot RDE cycle**

| | Averaged Accumulative Conversion (%) | | | Averaged Accumulative NH₃ (g) |
|---|---|---|---|---|
| | NOₓ | CO | THC | |
| Comparative Catalyst G | 92.3 | 96.6 | 97.4 | 778.1 |
| Inventive Catalyst 6 | 91.3 | 95.5 | 96.9 | 1130.6 |
| Inventive Catalyst 7 | 92.3 | 97.0 | 97.6 | 708.6 |

## Claims

1. A catalyst article for treating exhaust gas comprising:
a substrate comprising an inlet end, an outlet end with an axial length L;
a first catalytic region beginning at the inlet end and extending for less than the axial length L,
wherein the first catalytic region comprises a first platinum group metal (PGM) component, a first inorganic oxide, and an optional first oxygen storage capacity (OSC) material;
a second catalytic region beginning at the outlet end and extending for less than the axial length L, wherein the second catalytic region comprises a second PGM component, an optional second inorganic oxide, and a second OSC material; and
a third catalytic region;
wherein the weight ratio of the first inorganic oxide to the optional first OSC material is greater than 1:1.

2. The catalyst article of claim 1, wherein the first catalytic region extends for 20 to 90 percent of the axial length L.

3. The catalyst article of claim 1 or claim 2, wherein the second catalytic region extends for 20 to 90 percent of the axial length L.

4. The catalyst article of any one of the preceding claims, wherein the weight ratio of the first inorganic oxide to the optional first OSC material is at least 2:1.

5. The catalyst article of any one of the preceding claims, wherein the weight ratio of the optional second inorganic oxide to the second OSC material is less than 1:1.

6. The catalyst article of any one of the preceding claims, wherein the weight ratio of the optional second inorganic oxide to the second OSC material is no more than 1:2.

7. The catalyst article of any one of the preceding claims, wherein the first PGM component is Pd, Pt, Rh, or a combination thereof.

8. The catalyst article of any one of the preceding claims, wherein the optional first OSC material is selected from the group consisting of cerium oxide, a ceria-zirconia mixed oxide, and an alumina-ceria-zirconia mixed oxide.

9. The catalyst article of any one of the preceding claims, wherein the first inorganic oxide is selected from the group consisting of alumina, ceria, magnesia, silica, lanthanum, neodymium, praseodymium, yttrium oxides, and mixed oxides or composite oxides thereof.

10. The catalyst article of any one of the preceding claims, wherein the second PGM component is Pd, Pt, Rh, or a combination thereof.

11. The catalyst article of any one of the preceding claims, wherein the second OSC material is selected from the group consisting of cerium oxide, a ceria-zirconia mixed oxide, and an alumina-ceria-zirconia mixed oxide.

12. The catalyst article of any one of the preceding claims, wherein the optional second inorganic oxide is selected from the group consisting of alumina, ceria, magnesia, silica, lanthanum, neodymium, praseodymium, yttrium oxides, and mixed oxides or composite oxides thereof.

13. The catalyst article of any one of the preceding claims, wherein the first catalytic region is supported/deposited directly on the substrate.

14. The catalyst article of any one of claims 1-13, wherein the third catalytic region is supported/deposited directly on the substrate.

15. An emission treatment system for treating a flow of a combustion exhaust gas comprising the catalyst article of any one of claims 1-14.

16. A method of treating an exhaust gas from an internal combustion engine comprising contacting the exhaust gas with the catalyst article of any one of claims 1-14.
